# EUROPÄISCHE PATENTSCHRIFT

(11) **EP 3 833 858 B1**
(45) Veröffentlichungstag und Bekanntmachung des Hinweises auf die Patenterteilung: **22.11.2023**
(21) Anmeldenummer: 19749721.7
(22) Anmeldetag: 05.08.2019
(51) Int. Cl.: F01N 9/00, F01N 3/10, F01N 3/20, F01N 13/00

(54) **VERFAHREN UND VORRICHTUNG ZUR ABGASNACHBEHANDLUNG EINES VERBRENNUNGSMOTORS**
METHOD AND DEVICE FOR THE EXHAUST GAS AFTERTREATMENT OF AN INTERNAL COMBUSTION ENGINE
PROCÉDÉ ET DISPOSITIF DE POST-TRAITEMENT DE GAZ D'ÉCHAPPEMENT D'UN MOTEUR À COMBUSTION INTERNE

(30) Priorität: 06.08.2018 DE 102018119010
(43) Veröffentlichungstag der Anmeldung: 16.06.2021
(73) Patentinhaber: VOLKSWAGEN AG, 38440 Wolfsburg (DE)
(72) Erfinder: PAUKNER, Stefan, 38442 Wolfsburg (DE); BARON VON CEUMERN-LINDENSTJERNA, Falk-Christian, 38124 Braunschweig (DE); MANZ, Michael Alexander, 30855 Langenhagen (DE); KAACK, Michael, 38531 Rötgesbüttel (DE); NEE, Christoph, 38446 Wolfsburg (DE)
(74) Vertreter: Gulde & Partner
(86) Internationale Anmeldenummer: PCT/EP2019/070956
(87) Internationale Veröffentlichungsnummer: WO 2020/030560

(56) Entgegenhaltungen:
- EP-A1- 0 824 182
- EP-A1- 3 351 780
- DE-A1-102010 002 586
- DE-A1-102016 206 394

## Beschreibung

Die Erfindung betrifft ein Verfahren zur Abgasnachbehandlung eines Verbrennungsmotors sowie ein Abgasnachbehandlungssystem zur Durchführung eines solchen Verfahrens gemäß den Oberbegriffen der unabhängigen Patentansprüche.

Künftige Abgasgesetzgebungen stellen hohe Anforderungen an motorische Rohemissionen und an die Abgasnachbehandlung von Verbrennungsmotoren. Mit Einführung der Abgasgesetzgebung Euro 6d-Temp müssen die Kraftfahrzeuge die Emissionsgrenzen in einem realitätsnahen Betrieb (Real Driving Emissions) einhalten. Der Einsatz von mehrstufigen Abgasnachbehandlungskonzepten im Ottomotor-Umfeld wirft für neue Abgasvorschriften Fragen hinsichtlich der Regelbarkeit der verschiedenen Abgasnachbehandlungskomponenten sowie der Regelgüte und Betriebsbereitschaft der Abgasnachbehandlungskomponenten auf. Ein Forschungskonzept mit einer Abgasanlage welche bereits für eine mehrstufige Abgasnachbehandlung vorgesehen ist, zeigt auf, dass hier ein Lambdaregelungskonzept benötigt wird, welches die Besonderheiten der jeweiligen Abgasnachbehandlungskomponenten kennt und diese bei ihrem Regelverhalten berücksichtigt. Weiter besteht die Herausforderung darin, dass jede Abgasnachbehandlungskomponente eigene Randbedingungen für eine optimale Konvertierung der Schadstoffkomponenten im Abgas benötigt, um eine maximal effiziente Abgasnachbehandlung zu ermöglichen. Dabei zeigt sich, dass ein aus dem Stand der Technik bekanntes Lambdaregelungskonzept mit starr ausgelegtem Regelsystem nur suboptimale Emissionsergebnisse liefert.

Aus der DE 10 2010 002 586 A1 ist ein Verfahren zum Betreiben eines Verbrennungsmotors für ein Kraftfahrzeug mit einem Abgassystem bekannt, in welchem mindestens ein Katalysator und wenigstens eine Lambdasonde angeordnet sind. Der Verbrennungsmotor wird nach einem Kaltstart zum Aufheizen des Katalysators im Wechsel mit magerem und fettem Kraftstoff-Luft-Gemisch betrieben. Die Lambdasonde wird nach dem Kaltstart so beheizt, dass sie nach maximal zehn Sekunden betriebsbereit ist und der Verbrennungsmotor mit einer auf einem Signal der Lambdasonde basierenden Zweipunktregelung betrieben wird. Dabei wird ein Wechsel zwischen dem Betrieb mit magerem Kraftstoff-Luft-Gemisch und mit fettem Kraftstoff-Luft-Gemisch jeweils durch das Signal der Lambdasonde ausgelöst.

Aus der DE 10 2013 201 734 A1 ist ein Verfahren zum Betreiben einer Lambdasondenanordnung im Abgassystem eines Verbrennungsmotor mit wenigstens einer ersten Lambdasonde stromaufwärts eines Katalysators und wenigstens einer zweiten Lambdasonde stromabwärts des Katalysators bekannt. Dabei ist die zweite Lambdasonde als Sprungsonde ausgebildet. Dabei werden eine Diagnose eines Kennlinienoffsets der ersten Lambdasonde und gegebenenfalls eine Adaption eines Kennlinienoffsetfehlers vorgenommen. Dabei wird für die Diagnose bei aktiver Lambdaverstellung ein Wert, welcher die Sauerstoffspeicherfähigkeit des Katalysators repräsentiert, und ein weiterer Wert, der die Sauerstoffaustragungsfähigkeit aus dem Katalysator repräsentiert, erfasst. Aus dem Verhältnis von Sauerstoffspeicherfähigkeit und Sauerstoffaustragungsfähigkeit wird ein Kennlinienoffset der ersten Lambdasonde berechnet.

Die EP 2 884 066 A1 offenbart ein Verfahren zur Diagnose eines Gegenstandes wie eines Katalysators oder eines Filters. Um eine besonders genaue Aussage über eine Funktion des Katalysators zu erhalten, ist dabei vorgesehen, dass zur Messung einer katalytischen Reaktivität eine Stirnseite des Katalysators mit einem Prüfmedium mit definierter Zusammensetzung wie Propangas oder Kohlenmonoxid mittels einer Einrichtung durch eine Öffnung beaufschlagt wird und an einer stromabwärts gelegenen Position eine Konzentration von zumindest einem reduzierten oder oxidierten Bestandteil des Prüfmediums nach Passieren des Katalysators gemessen wird. Eine solche Beaufschlagung mit einem definiert zusammengesetzten (Ab-)Gas ist jedoch nur im Laborbetrieb möglich. Daher eignet sich ein solches Verfahren nicht zur Optimierung der Emissionen im realen Fahrbetrieb.

Aus der DE 10 2005 041 659 A1 ist ein Verbrennungsmotor mit einer Abgasanlage bekannt, in welcher in Strömungsrichtung ein Vorkatalysator und stromabwärts des Vorkatalysators ein Hauptkatalysator angeordnet ist. Dabei ist vorgesehen, dass das Abgas des Verbrennungsmotors aus dem Abgaskanal abgezapft und über einen Wärmetauscher abgekühlt wird, bevor es dem Abgaskanal stromaufwärts des Vorkatalysators wieder zugeführt wird.

Die DE 10 2016 119 657 A1 offenbart ein Verfahren zur Abgasnachbehandlung eines Verbrennungsmotors mit einer Abgasanlage, in welcher stromabwärts eines Drei-Wege-Katalysator ein passiver SCR-Katalysator angeordnet ist, wobei durch einen unterstöchiometrischen Betrieb des Verbrennungsmotors auf dem Drei-Wege-Katalysator Ammoniak für die selektive katalytische Reduktion auf dem passiven SCR-Katalysator gebildet wird.

Darüber hinaus ist aus der WO 2015 / 040 396 A1 ein Katalysator mit einem ersten Substrat und mit einem zweiten Substrat bekannt, wobei das zweite Substrat eine höhere Zelldichte als das erste Substrat aufweist. Das zweite Substrat ist durch einen Luftspalt vom ersten Substrat beabstandet, wobei das erste Substrat elektrisch beheizbar ist.

Die DE 10 2016 206 394 A1 offenbart ein Verfahren zur Abgasnachbehandlung eines Verbrennungsmotors mit einer zweiflutig ausgebildeten Abgasanlage, wobei beide Abgasfluten durch einen gemeinsamen Brenner beheizt werden können. In jeder der Abgasfluten sind ein erster und ein zweiter Katalysator angeordnet, wobei die λ-Regelung des Verbrennungsmotors und/oder des Brenners zumindest während einer Aufheizphase der Abgasanlage durch eine stromabwärts des zweiten Katalysators angeordnete Lambdasonde erfolgt. Es ist vorgesehen, dass die Abgasanlage insbesondere nach einem Kaltstart des Verbrennungsmotors durch den Brenner erhitzt wird, um die Katalysatoren möglichst schnell auf eine Light-Off-Temperatur zu bringen und eine wirksame Konvertierung der Schadstoffe im Abgas zu ermöglichen.

EP 3 351 780 A1 beschreibt eine Steuervorrichtung zur Abgasreinigung eines Verbrennungsmotors. Die Steuervorrichtung umfasst einen Kraftstoffregler, welcher, wenn eine vorbestimmte Bedingung für das Abschneiden von Kraftstoff erfüllt ist, die Zufuhr von Kraftstoff zu dem Verbrennungsmotor nach Ablauf einer vorbestimmten Verzögerungszeit abschaltet, einen Rechner, der die Sauerstoff-Speicherfähigkeit eines Katalysators und einen Einsteller, der eine Länge der Verzögerungszeit in Übereinstimmung mit der Sauerstoff-Speicherfähigkeit des Katalysators einstellt.

Aus der EP 0 824 182 A1 ist ein Abgasnachbehandlungssystem für einen Verbrennungsmotor mit einem Adsorber für unverbrannte Kohlenwasserstoffe und einem dem Adsorber nachgeschalteten Katalysator bekannt. Der Katalysator weist einen Sauerstoffspeicher auf, in welchem Sauerstoff bei einem überstöchiometrischen Betrieb des Verbrennungsmotors eingespeichert und bei einem unterstöchiometrischen Betrieb wieder freigesetzt werden kann. Dabei wird der HC-Adsorber unmittelbar nach einem Kaltstart des Verbrennungsmotors mit unverbrannten Kohlenwasserstoffen beladen und diese im weiteren Betrieb des Verbrennungsmotors freigesetzt und mit dem im Katalysator eingespeicherten Sauerstoff konvertiert.

Der Erfindung liegt nun die Aufgabe zugrunde, die Konvertierungsleistung des Abgasnachbehandlungssystems weiter zu verbessern und insbesondere die Lambdaregelung derart anzupassen, dass die Effizienz der Abgasnachbehandlungskomponenten weiter gesteigert werden kann.

Erfindungsgemäß wird diese Aufgabe durch ein Abgasnachbehandlungssystem zur Abgasnachbehandlung eines Verbrennungsmotors gelöst, wobei ein Auslass des Verbrennungsmotors mit einer Abgasanlage verbindbar ist. In der Abgasanlage sind in Strömungsrichtung eines Abgases des Verbrennungsmotors durch die Abgasanlage ein erster Drei-Wege-Katalysator und stromabwärts des ersten Drei-Wege-Katalysators ein elektrisch beheizbarer Katalysator angeordnet. In der Abgasanlage sind ferner drei Lambdasonden angeordnet, wobei die erste Lambdasonde in Abgasstromrichtung eines Abgases des Verbrennungsmotors durch die Abgasanlage stromaufwärts des ersten Drei-Wege-Katalysators und zumindest eine zweite Lambdasonde stromabwärts des ersten Drei-Wege-Katalysators und stromaufwärts des elektrisch beheizbaren Katalysators angeordnet ist. Ferner ist in der Abgasanlage eine dritte Lambdasonde angeordnet, mit welcher die Regelstrecke der Lambdaregelung in Abgängigkeit von der Abgastemperatur verkürzt oder verlängert wird. Dabei wird die Regelstrecke der Lambdaregelung auf die dritte Lambdasonde verlängert, sobald eine für die Konvertierung notwendige Light-Off-Temperatur des stromaufwärts der dritten Lambdasonde angeordneten Katalysators erreicht wird, und die Regelstrecke wieder auf die zweite Lambdasonde verkürzt, wenn die für die Konvertierung notwendige Light-Off-Temperatur des stromaufwärts der dritten Lambdasonde angeordneten Katalysators unterschritten wird. Durch ein erfindungsgemäßes Abgasnachbehandlungssystem ist es möglich, die jeweilige Betriebsbereitschaft und deren Konvertierungsleistung in Abhängigkeit von der Bauteiltemperatur zu berücksichtigen und somit eine emissionsoptimale Abgasnachbehandlung zu gewährleisten. Ferner können in der Abgasnachbehandlung besondere Betriebssituationen wie beispielsweise die Regeneration eines Partikelfilters berücksichtigt werden, um das Ergebnis der Abgasnachbehandlung weiter zu verbessern und Sekundäremissionen zu vermeiden.

Durch die in den abhängigen Ansprüchen angegebenen Merkmale sind vorteilhafte Verbesserungen und Weiterentwicklungen des im unabhängigen Anspruch angegebenen Abgasnachbehandlungssystems möglich.

In einer bevorzugter Ausgestaltung der Erfindung ist vorgesehen, dass der erste Drei-Wege-Katalysator als Lambdasondenkatalysator mit einer integrierten Lambdasonde ausgeführt ist.

Dabei weist der Lambdasondenkatalysator ein erstes Konvertervolumen und ein zweites Konvertervolumen auf, wobei zwischen dem ersten Konvertervolumen und dem zweiten Konvertervolumen die Lambdasonde angeordnet ist. Das erste Konvertervolumen ist vorzugsweise als Startkatalysator und entsprechend kleinvolumig ausgebildet, um ein möglichst schnelles Aufheizen des ersten Konvertervolumens auf seine Light-Off-Temperatur nach dem Kaltstart des Verbrennungsmotors zu ermöglichen. Das zweite Konvertervolumen ist vorzugsweise als Hauptkatalysator und entsprechend großvolumig ausgestaltet, um ein größeres Katalysatorvolumen bereitzustellen und insbesondere in einem Hochlastbetrieb des Verbrennungsmotors eine entsprechende Konvertierungsleistung für die limitierten Abgaskomponenten bereitzustellen. Zudem bietet ein Abgasnachbehandlungssystem mit einem Lambdasondenkatalysator Vorteile bezüglich des Bauraumbedarfs, da stromabwärts des elektrisch beheizbaren Katalysators kein weiterer Katalysator angeordnet ist. Durch die motornahe zweite Lambdasonde ist eine vereinfachte Aufrechterhaltung eines minimalen Regelkreises für die Eigenfrequenzregelung der Lambdasonden möglich, sodass diese Regelung zeitlich schneller nach einem Kaltstart und/oder in einem Schwachlastbetrieb des Verbrennungsmotors aktivierbar ist. Dabei ist unter einem Lambdasondenkatalysator ein Drei-Wege-Katalysator zu verstehen, in dessen Gehäuse eine Lambdasonde angeordnet ist. Dabei kann die Lambdasonde in einer Ausfräsung oder in einem Zwischenraum zwischen zwei Substraten, welche in einem gemeinsamen Gehäuse angeordnet sind, angeordnet sein.

In einer weiteren Verbesserung des Abgasnachbehandlungssystems ist vorgesehen, dass die in Strömungsrichtung eines Abgases des Verbrennungsmotors letzte Lambdasonde stromaufwärts des elektrisch beheizbaren Katalysators angeordnet ist. Dadurch kann sichergestellt werden, dass der Katalysator stromabwärts der letzten Lambdasonde zeitnah nach einem Kaltstart des Verbrennungsmotors seine Light-Off-Temperatur erreicht. Somit kann die letzte Lambdasonde vergleichsweise schnell für die Eigenfrequenzregelung genutzt werden, da das Katalysatorvolumen des elektrisch beheizbaren Katalysators entsprechend aktiv ist.

In einer weiteren bevorzugten Ausführungsform des Abgasnachbehandlungssystems ist vorgesehen, dass stromabwärts des elektrisch beheizbaren Katalysators ein weiterer Katalysator, insbesondere ein weiterer Drei-Wege-Katalysator oder ein Vier-Wege-Katalysator, angeordnet sind. Durch einen weiteren Katalysator kann das katalytisch wirksame Volumen vergrößert werden, sodass auch bei einem längeren Hochlastbetrieb ein hinreichendes Katalysatorvolumen zur Konvertierung der Schadstoffe zur Verfügung steht. Ferner können bei einem Durchbruch durch den elektrisch beheizbaren Katalysator die im Abgas verbleibenden Schadstoffe durch den dritten Katalysator konvertiert werden, sodass die Effizienz des Abgasnachbehandlungssystems weiter gesteigert werden kann.

Bevorzugt ist dabei, wenn alle drei Katalysatoren eine Drei-Wege-katalytisch wirksame Beschichtung aufweisen und zumindest einer der Katalysatoren ein Substrat zur Zurückhaltung von Rußpartikeln aufweist. Auf diese Weise können neben einer maximal effizienten Konvertierung der gasförmigen Schadstoffkomponenten auch die Partikelemissionen aus dem Abgas zurückgehalten und somit die Emissionen weiter reduziert werden.

In einer bevorzugten Ausführungsform der Erfindung ist vorgesehen, dass die erste Lambdasonde als Breitbandsonde und die weiteren Lambdasonden jeweils als Sprungsonde aufgeführt sind. Durch eine Breitbandsonde kann eine quantitative Bestimmung des Verbrennungsluftverhältnisses im Abgaskanal erfolgen. Durch die Sprungsonden kann ein Durchbruch durch den jeweiligen Katalysator erkannt werden, um im Rahmen der Lambdaregelung das Verbrennungsluftverhältnis entsprechend anzupassen. Da Sprungsonden günstiger sind als Breitbandsonden, können somit die Kosten für die Lambdasondenanordnung gering gehalten werden.

In einer weiteren bevorzugten Ausführungsform des Abgasnachbehandlungssystems ist vorgesehen, dass der elektrisch beheizbare Katalysator als Vier-Wege-Katalysator ausgeführt ist. Da ab der Emissionsgesetzgebung Euro 6 auch für Ottomotoren ein Grenzwert für die Partikelemissionen vorgeschrieben ist, kann es für eine Vielzahl von Kraftfahrzeugen mit Ottomotor notwendig sein, einen Partikelfilter in der Abgasnachbehandlung einzusetzen. Der Partikelfilter kann eine Beschichtung aufweisen, welche eine drei-Wege-katalytische Wirkung aufweist. Ein solcher Partikelfilter wird als Vier-Wege-Katalysator bezeichnet. Im Kontext dieser Patentanmeldung ist ein solcher Vier-Wege-Katalysator auch als Drei-Wege-Katalysator zu verstehen, da er die Funktion eines Drei-Wege-Katalysators erfüllt.

Besonders bevorzugt ist dabei, wenn der Partikelfilter des Vier-Wege-Katalysators ein elektrisch leitendes Filtersubstrat aufweist, wobei das Filtersubstrat durch das Anlegen einer elektrischen Spannung direkt beheizbar ist. Durch ein elektrisch beheizbares Filtersubstrat kann ein direktes Beheizen der katalytisch wirksamen Struktur erfolgen. Dadurch ist kein vorgeschaltetes Heizelement notwendig. Zudem kann durch ein elektrisches Beheizen des Filtersubstrats die Regeneration des Vier-Wege-Katalysators unterstützt werden, um die im Vier-Wege-Katalysator zurückgehaltenen Rußpartikel zu oxidieren.

Erfindungsgemäß wird ein Verfahren zur Abgasnachbehandlung eines Verbrennungsmotors mit einem erfindungsgemäßen Abgasnachbehandlungssystem und einem Motorsteuergerät vorgeschlagen, wobei das Verfahren folgende Schritte umfasst:
- Starten des Verbrennungsmotors, wobei das
- Regeln des Verbrennungsluftverhältnisses des Verbrennungsmotors in einer Kaltstartphase des Verbrennungsmotors durch die erste Lambdasonde erfolgt,
- Beheizen des elektrisch beheizbaren Katalysators ab dem Kaltstart des Verbrennungsmotors,
- Erweitern der Lambdaregelung auf die Lambdasonde stromabwärts des in Strömungsrichtung jeweils letzten Katalysators, welcher seine Light-Off-Temperatur erreicht hat.

Jede Vorrichtung zur katalytischen Abgasreinigung benötigt zum Erreichen einer Wirksamkeit das Überschreiten einer Mindesttemperatur, der sogenannten Light-off-Temperatur. Durch das erfindungsgemäße Verfahren kann zeitnah nach einem Kaltstart oder in einem Schwachlastbetrieb eines Verbrennungsmotors ein zusätzliches Katalysatorvolumen bereitgestellt werden. Durch die Lambdaregelung auf die jeweils letzte Lambdasonde unmittelbar stromaufwärts eines Katalysators, welcher seine Light-Off-Temperatur erreicht hat, erfolgt eine möglichst effiziente Nutzung des aktiven Katalysatorvolumens. Dadurch ist eine besonders effiziente Konvertierung der Schadstoffe möglich, wodurch die Endrohremissionen minimiert werden können.

In einer vorteilhaften Ausführungsform des Verfahrens ist vorgesehen, dass die Lambdaregelung nach dem Prinzip der Eigenfrequenzregelung erfolgt. Unter einer Eigenfrequenz-Lambdaregelung ist im Kontext dieser Patentanmeldung ein Regelsystem zu verstehen, bei dem das verwendete Katalysatorvolumen vollständig bis zum Mager- oder Fettdurchbruch der jeweils vorgesteuerten Komponente durchströmt wird. Dadurch kann an der Lambdasonde stromabwärts des durchströmten Katalysatorvolumens das "Durchbrechen" der Komponente detektiert werden und erst dann auf die andere Vorsteuerung umgeschaltet werden. Dieses Vorgehen macht ein nachgelagertes Konvertervolumen durch einen weiteren Katalysator, insbesondere einen weiteren Drei-Wege-Katalysator, unverzichtbar. Wird die Lambdaregelung nach dem Prinzip der Eigenfrequenzregelung ausgeführt, so kann das komplette Katalysatorvolumen des Katalysators zur Umsetzung der Emissionen genutzt werden. Ferner werden dabei Alterungshotspots im Katalysator durch die alternative bilanzierte Umschaltung vor Durchbruch vermieden, wodurch die Lebensdauer des Katalysators erhöht wird. Darüber hinaus ist ein schnelles Ausregeln der Lambdamittellage über das gesamte Abgassystem möglich, wobei ein Offset adaptiert werden kann. Dadurch ist eine besonders wirksame Abgasnachbehandlung mit minimalen Emissionen möglich.

Besonders bevorzugt ist dabei, wenn das elektrische Beheizen des elektrisch beheizbaren Katalysators nach dem Kaltstart solange aktiviert bleibt, dass ein Auskühlen des elektrisch beheizbaren Katalysators unter seine Light-Off-Temperatur vermieden wird. Dadurch kann das Katalysatorvolumen des beheizbaren Katalysators ab dem Erreichen seiner Light-Off-Temperatur dauerhaft genutzt werden. Somit kann die Eigenfrequenzregelung durch die zweite Lambdasonde erfolgen und bei höheren Abgastemperaturen auf die dritte Lambdasonde ausgeweitet werden. Zudem steht mit dem Katalysatorvolumen des elektrisch beheizbaren Katalysators und des ersten Katalysators ab Erreichen der Light-Off-Temperatur ein entsprechend großes Katalysatorvolumen zur Verfügung, um eine effiziente Abgasnachbehandlung des Abgases des Verbrennungsmotors sicherzustellen.

In einer bevorzugten Ausführungsvariante des Verfahrens ist vorgesehen, dass die Lambdaregelung durch die erste Lambdasonde und die zweite Lambdasonde erfolgt, wenn die Temperatur eines weiteren Katalysators stromabwärts des elektrisch beheizbaren Katalysators im Betrieb des Verbrennungsmotors unter seine Light-Off-Temperatur absinkt. Dadurch wird die Regelstrecke der Eigenfrequenz-Regelung zwar verkürzt, jedoch kann weiterhin das Katalysatorvolumen des motornahen ersten Katalysators und des elektrisch beheizbaren Katalysators zur Konvertierung von Schadstoffen genutzt werden. Dadurch kann bei Absinken der Abgastemperatur sichergestellt werden, dass weiterhin eine hocheffiziente Abgasnachbehandlung möglich ist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Dabei sind gleiche Bauteile oder Bauteile mit gleicher Funktion mit den gleichen Bezugszeichen gekennzeichnet. Es zeigen:
- Figur 1: ein Ausführungsbeispiel eines Verbrennungsmotors mit einem erfindungsgemäßen Abgasnachbehandlungssystem.
- Figur 2: ein weiteres Ausführungsbeispiel für einen Verbrennungsmotor mit einem erfindungsgemäßen Abgasnachbehandlungssystem; und
- Figur 3: ein Ablaufdiagramm zur Durchführung eines erfindungsgemäßen Verfahrens zur Abgasnachbehandlung eines Verbrennungsmotors.

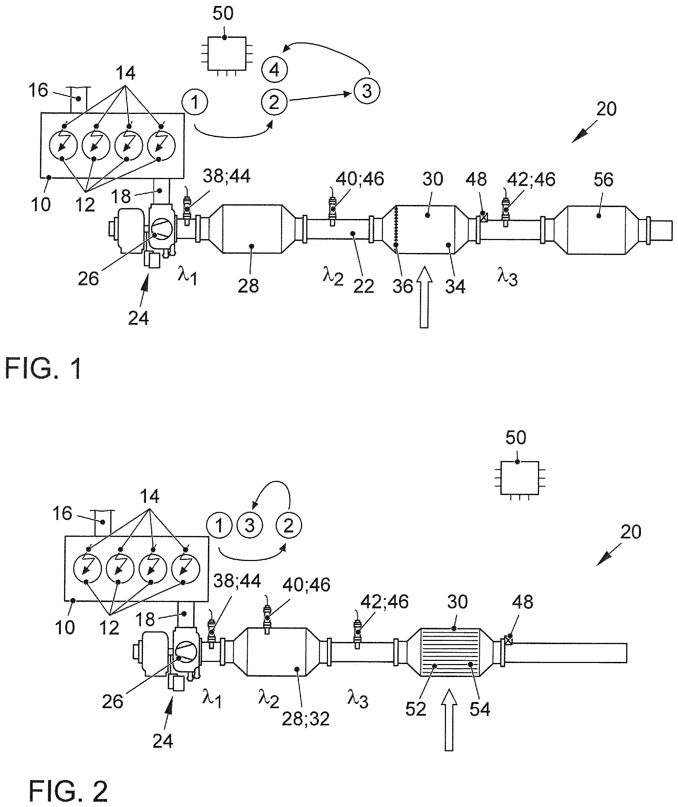

Figur 1 zeigt einen Verbrennungsmotor 10 mit einem erfindungsgemäßen Abgasnachbehandlungssystem in einer schematischen Darstellung. Der Verbrennungsmotor 10 weist eine Mehrzahl von Brennräumen 12 auf, an welchen jeweils eine Zündkerze 14 angeordnet ist. Der Verbrennungsmotor 10 weist einen Einlass 16 auf, mit welchem der Verbrennungsmotor 10 mit einem aus Gründen der Übersichtlichkeit nicht dargestellten Luftversorgungssystem verbindbar ist. Der Verbrennungsmotor 10 weist ferner einen Auslass 18 auf, mit welchem der Verbrennungsmotor 10 mit einer Abgasanlage 20 verbunden ist, derart, dass ein Abgas aus den Brennräumen 12 des Verbrennungsmotors 10 in die Abgasanlage 20 geleitet werden kann. Die Abgasanlage 20 umfasst einen Abgaskanal 22, in welchem in Strömungsrichtung eines Abgases des Verbrennungsmotors 10 durch den Abgaskanal 22 eine Turbine 26 eines Abgasturboladers 24, stromabwärts der Turbine 26 ein erster Katalysator 28, stromabwärts des ersten Katalysators 28 ein zweiter Katalysator 30 und weiter stromabwärts ein dritter Katalysator 56 angeordnet sind. Der erste Katalysator 28 ist als Drei-Wege-Katalysator ausgeführt und in einer motornahen Position in der Abgasanlage 20 angeordnet. Unter einer motornahen Position wird in diesem Zusammenhang eine Position mit einer Abgaslauflänge von weniger als 80 cm, vorzugsweise von weniger als 50 cm, ab dem Auslass 18 des Verbrennungsmotors 10 verstanden. Der zweite Katalysator 30 ist als mittels eines elektrischen Heizelements 36 aktiv beheizbarer Drei-Wege-Katalysator 34 ausgeführt. Der dritte Katalysator 56 ist vorzugsweise in einer Unterbodenposition eines Kraftfahrzeuges angeordnet und ebenfalls als Drei-Wege-Katalysator ausgeführt. Vorzugsweise ist einer der Katalysatoren 28, 30, 56 als Vier-Wege-Katalysator 52 ausgeführt, sodass zusätzlich zur Konvertierung der gasförmigen Abgasbestandteile auch ein Zurückhalten von Rußpartikeln möglich ist.

Stromabwärts der Turbine 26 des Abgasturboladers 24 und stromaufwärts des ersten Katalysators 28 ist im Abgaskanal 22 eine erste Lambdasonde 38 angeordnet. Die erste Lambdasonde 38 ist vorzugsweise als Breitbandsonde 44 ausgeführt und ermöglicht somit eine quantitative Beurteilung des Verbrennungsluftverhältnisses stromaufwärts des ersten Katalysators 28. Stromabwärts des ersten Katalysators 28 und stromaufwärts des zweiten Katalysators 30 ist im Abgaskanal 22 eine zweite Lambdasonde 40 vorgesehen, welche vorzugsweise als Sprungsonde 46 ausgeführt ist. Stromabwärts des zweiten Katalysators 30 und stromaufwärts des dritten Katalysators 32 ist im Abgaskanal 22 eine dritte Lambdasonde 42 angeordnet, welche vorzugsweise ebenfalls als Sprungsonde 46 ausgeführt ist. Ferner ist im Abgaskanal 22 ein Temperatursensor 48 angeordnet, um die Abgastemperatur zu messen und somit die Bauteiltemperatur der Katalysatoren 28, 30, 32 zu berechnen.

Alternativ zu einem elektrischen Heizelement 52, welches dem Katalysator 30, 56 vorgeschaltet ist, kann bei einer Ausführung des aktiv beheizbaren Katalysators 34 als Vier-Wege-Katalysator 52 auch das Filtersubstrat 54 des Vier-Wege-Katalysators 52 elektrisch leitend und somit direkt beheizbar ausgeführt sein.

Der Verbrennungsmotor 10 sowie die Lambdasonden 38, 40, 42 und der Temperatursensor 48 sind über Signalleitungen mit einem Motorsteuergerät 50 verbunden. Anhand der Informationen der Lambdasonden 38, 40, 42 und des Temperatursensors 48 werden die Einspritzmenge, der Einspritzzeitpunkt und der Zündzeitpunkt in den Brennräumen 12 gesteuert, um eine möglichst emissionsarme Verbrennung des Kraftstoff-Luft-Gemischs gewährleisten zu können. Ferner wird die Position einer Drosselklappe im Ansaugtrakt des Verbrennungsmotors 10 gesteuert, um die den Brennräumen 12 zugeführte Luftmenge zu regeln.

Um die Emissionen des Verbrennungsmotors 10 nach einem Kaltstart zu minimieren, ist die schnelle Bereitstellung eines möglichst großen aktiven Katalysatorvolumens essentiell. Die Eigenfrequenzregelung stellt ein robustes Konzept für die Lambdaregelung dar, da sie sowohl auf den Alterungszustand der katalytisch wirksamen Beschichtung reagiert, als auch weitere Katalysatoreigenschaften der Katalysatoren 28, 30, 56 Prinzip bedingt berücksichtigt. Ziel ist eine möglichst schnelle Aktivierung der Eigenfrequenzregelung nach dem Kaltstart des Verbrennungsmotors 10. Voraussetzung für eine solche Eigenfrequenzregelung ist jedoch, dass ein Katalysator 30, 56 stromabwärts derjenigen Lambdasonde 40, 42, welche für die Eigenfrequenzregelung herangezogen werden soll, seine Light-Off-Temperatur erreicht hat. Weiterhin ist es von Vorteil, wenn durch das Verfahren ein möglichst großes Katalysatorvolumen genutzt werden kann.

Zur Nutzung einer Lambdasonde 38, 40, 42 in der Eigenfrequenz-Regelstrecke der Lambdaregelung muss der stromabwärts dieser Lambdasonde 38, 40, 42 verbaute Katalysator 28, 30, 56 seine Light-Off-Temperatur erreicht haben. Da dies bei einer motorfernen Position des Katalysators 30, 56, insbesondere in einer Unterbodenlage eines Kraftfahrzeuges, nicht in allen Betriebssituationen des Verbrennungsmotors 10 gewährleistet ist, sorgt eine externe aktive Beheizung dieses Katalysators 30, 56 für die notwendige Temperatur auch in schwachlastigen Betriebssituationen oder unmittelbar nach dem Kaltstart des Verbrennungsmotors 10.

Hat der Katalysator 56 stromabwärts des beheizbaren Katalysators 30, 34 seine Light-Off-Temperatur erreicht, kann die Regelstrecke der Eigenfrequenz-Regelung auf die dritte Lambdasonde 42 erweitert werden und so ein größeres Katalysatorvolumen für die Konvertierung von schädlichen Abgaskomponenten genutzt werden. Sinkt die Temperatur des dritten Katalysators 56 wieder unter seine Light-Off-Temperatur ab, muss die Regelstrecke der Eigenfrequenz-Regelung wieder verkürzt werden. In diesem Fall erfolgt eine Regelung über die zweite Lambdasonde 40. Die Realisierung der Variabilität in der Eigenfrequenz-Regelstrecke erfordert eine intelligente Detektion des bereits aktiven Katalysatorvolumens der Katalysatoren 28, 30, 56. Dies kann durch ein im Steuergerät 50 des Verbrennungsmotors 10 abgelegtes Berechnungsmodell erfolgen. Das Berechnungsmodell kann die Daten des Temperatursensors 48 nutzen.

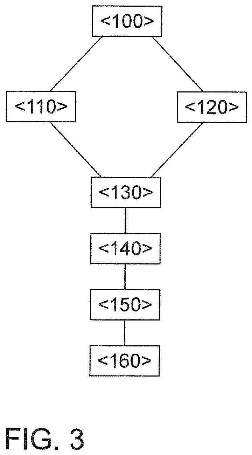

In Figur 3 ist ein Ablaufdiagramm zur Durchführung eines erfindungsgemäßen Verfahrens zur Abgasnachbehandlung eines Verbrennungsmotors 10 mit dem in Figur 1 dargestellten Abgasnachbehandlungssystem gezeigt. Bei einem Kaltstart <100> des Verbrennungsmotors 10 erfolgt die Lambdaregelung zunächst in einem ersten Verfahrensschritt <110> über die auch als Führungssonde bezeichnete erste Lambdasonde 38. Dabei wird das Verbrennungsluftverhältnis des Verbrennungsmotors 10 auf ein stöchiometrisches Verbrennungsluftverhältnis (λ = 1) eingeregelt. Gleichzeitig erfolgt in einem Verfahrensschritt <120> ein Aufheizen des elektrisch beheizbaren Katalysators 34 mit dem Ziel der möglichst schnellen Nutzung dieses Katalysators 34. Hat der elektrisch beheizbare Katalysator 34 seine Light-Off-Temperatur erreicht und kann zumindest kurzfristig ein Auskühlen dieses Katalysators 34 unter seine Light-Off-Temperatur ausgeschlossen werden, was durch eine Temperaturmessung oder ein im Steuergerät 50 abgelegtes Berechnungsmodell ermittelt werden kann, wird die zweite Lambdasonde 40 stromaufwärts des elektrisch beheizbaren Katalysators 34 in die Eigenfrequenzregelung mit einbezogen. Hat auch der dritte Katalysator 56 stromabwärts des elektrisch beheizbaren Katalysators 34 seine Light-Off-Temperatur erreicht, wird in einem nächsten Verfahrensschritt <130> die Eigenfrequenzregelung auf die dritte Lambdasonde 42 ausgedehnt. In Schwachlastphasen des Verbrennungsmotors 10 kann die Temperatur des dritten Katalysators 56 wieder unter seine Light-Off-Temperatur fallen. In diesem Fall wird die Regelstrecke der Eigenfrequenz-Regelung in einem nächsten Verfahrensschritt <140> auf die zweite Lambdasonde 40 stromabwärts des motornahen ersten Katalysators 28 verkürzt. Steigt die Temperatur des dritten Katalysators 56 im weiteren Betrieb <150> des Verbrennungsmotors 10 durch das Abgas des Verbrennungsmotors 10 wieder auf seine Light-Off-Temperatur, so wird die Regelstrecke der Eigenfrequenz-Regelung in einem Verfahrensschritt <160> wieder auf die dritte Lambdasonde 42 ausgedehnt. Der dritte Katalysator 56 in der Abgasanlage 20 dient zusätzlich der Verhinderung von Emissionsdurchbrüchen während der On-Board-Diagnose der dritten Lambdasonde 42.

In Figur 2 ist ein weiteres Ausführungsbeispiel eines erfindungsgemäßen Abgasnachbehandlungssystems für einen Verbrennungsmotor 10 dargestellt. Das Abgasnachbehandlungssystem umfasst ein Motorsteuergerät 50 und eine Abgasanlage 20, in welcher in Strömungsrichtung eines Abgases des Verbrennungsmotors 10 durch die Abgasanlage 20 eine Turbine 26 eines Abgasturbolader 24, stromabwärts der Turbine 26 ein erster Katalysator 28, welcher als ein Lambdasondenkatalysator 32 ausgeführt ist, und stromabwärts des Lambdasondenkatalysators 32 ein zweiter Katalysator 30, welcher als elektrisch beheizbarer Katalysator 34 ausgeführt ist, angeordnet sind. Stromabwärts der Turbine 26 und stromaufwärts des Lambdasondenkatalysators 32 ist eine erste Lambdasonde 38 angeordnet. Stromabwärts des Lambdasondenkatalysators 32 und stromaufwärts des elektrisch beheizbaren Katalysators 34 ist eine dritte Lambdasonde 42 angeordnet. Der Lambdasondenkatalysator 32 umfasst ein erstes Konvertervolumen und ein stromabwärts des ersten Konvertervolumens angeordnetes zweites Konvertervolumen, wobei zwischen dem ersten Konvertervolumen und dem zweiten Konvertervolumen eine zweite Lambdasonde 40 angeordnet ist. Das erste Konvertervolumen ist vorzugsweise kleinvolumig und als Startkatalysator ausgeführt, um sich nach einem Kaltstart des Verbrennungsmotors 10 möglichst schnell auf seine Light-Off-Temperatur aufzuwärmen. Durch die Integration der zweiten Lambdasonde 40 in den ersten Katalysator 28 verringert sich das minimale Katalysatorvolumen, welches seine Light-Off-Temperatur erreicht haben muss, damit eine Eigenfrequenz-Regelung im kleinstmöglichen Regelkreis mit der ersten Lambdasonde 38 und der zweiten Lambdasonde 40 möglich ist. Der elektrisch beheizbare Katalysator 34 dient zusätzlich der Verhinderung von Emissionsdurchbrüchen während der On-Board-Diagnose der dritten Lambdasonde 42.

### Bezugszeichenliste

- 10: Verbrennungsmotor
- 12: Brennraum
- 14: Zündkerze
- 16: Einlass
- 18: Auslass

- 20: Abgasanlage
- 22: Abgaskanal
- 24: Abgasturbolader
- 26: Turbine
- 28: erster Katalysator

- 30: zweiter Katalysator
- 32: Lambdasondenkatalysator
- 34: beheizbarer Katalysator
- 36: elektrisches Heizelement
- 38: erste Lambdasonde

- 40: zweite Lambdasonde
- 42: dritte Lambdasonde
- 44: Breitbandsonde
- 46: Sprungsonde
- 48: Temperatursensor

- 50: Motorsteuergerät
- 52: Vier-Wege-Katalysator
- 54: Filtersubstrat
- 56: dritter Katalysator

## Patentansprüche

1. Abgasnachbehandlungssystem zur Abgasnachbehandlung eines Verbrennungsmotors (10), wobei ein Auslass (18) des Verbrennungsmotors (10) mit einer Abgasanlage (20) verbindbar ist, wobei in der Abgasanlage (20) in Strömungsrichtung eines Abgases durch die Abgasanlage (20) ein erster Drei-Wege-Katalysator (28) und stromabwärts des ersten Drei-Wege-Katalysators (28) ein elektrisch beheizbarer Drei-Wege-Katalysator (34) angeordnet ist, wobei in der Abgasanlage (20) drei Lambdasonden (38, 40, 42) angeordnet sind, wobei eine erste Lambdasonde (38) in Abgasstromrichtung eines Abgases des Verbrennungsmotors (10) durch die Abgasanlage (20) stromaufwärts des ersten Drei-Wege-Katalysators (28) und eine zweite Lambdasonde (40) stromabwärts des ersten Drei-Wege-Katalysators (28) und stromaufwärts des elektrisch beheizbaren Katalysators (34) angeordnet sind, und wobei in der Abgasanlage (20) ein Temperatursensor (48) zum Messen einer Abgastemperatur angeordnet ist, **dadurch gekennzeichnet, dass** in der Abgasanlage (20) stromabwärts der zweiten Lambdasonde (40) eine dritte Lambdasonde (42) angeordnet ist, wobei die Lambdasonden (38, 40, 42) und der Temperatursensor (48) über Signalleitungen mit einem Motorsteuergerät (50) verbunden sind, wobei das Motorsteuergerät (50) dazu eingerichtet ist, die Regelstrecke der Lambdaregelung in Abhängigkeit von der Abgastemperatur zu verkürzen oder zu verlängern, wobei die Regelstrecke der Lambdaregelung auf die dritte Lambdasonde (42) verlängert wird, sobald eine für die Konvertierung notwendige Light-Off-Temperatur eines stromaufwärts der dritten Lambdasonde (42) angeordneten Katalysators (30, 56) erreicht wird, und die Regelstrecke wieder auf die zweite Lambdasonde (40) verkürzt wird, wenn die für die Konvertierung notwendige Light-Off-Temperatur des stromaufwärts der dritten Lambdasonde (42) angeordneten Katalysators (30, 56) unterschritten wird.

2. Abgasnachbehandlungssystem nach Anspruch 1, **dadurch gekennzeichnet, dass** der erste Drei-Wege-Katalysator (28) als Lambdasondenkatalysator (32) mit einer integrierten zweiten Lambdasonde (40) ausgeführt ist.

3. Abgasnachbehandlungssystem nach Anspruch 2, **dadurch gekennzeichnet, dass** die in Strömungsrichtung eines Abgases des Verbrennungsmotors (10) dritte Lambdasonde (42) stromaufwärts des elektrisch beheizbaren Katalysators (34) angeordnet ist.

4. Abgasnachbehandlungssystem nach Anspruch 1, **dadurch gekennzeichnet, dass** in der Abgasanlage (20) stromabwärts des elektrisch beheizbaren Katalysators (34) ein dritter Katalysator (56) angeordnet ist.

5. Abgasnachbehandlungssystem nach Anspruch 4, **dadurch gekennzeichnet, dass** der erste Katalysator, der elektrische beheizbare Katalysator (34) und der dritte Katalysator (56) jeweils eine drei-Wege-katalytisch wirksame Beschichtung aufweisen und zumindest einer der Katalysatoren (28, 34, 56) zusätzlich ein Substrat zur Zurückhaltung von Rußpartikeln aufweist.

6. Abgasnachbehandlungssystem nach einem der Ansprüche 1 bis 5, **dadurch gekennzeichnet, dass** die erste Lambdasonde (38) als Breitbandsonde (44) und die zweite und dritte Lambdasonde (40, 42) als Sprungsonden ausgeführt sind.

7. Abgasnachbehandlungssystem nach einem der Ansprüche 1 bis 6, **dadurch gekennzeichnet, dass** der elektrisch beheizbare Katalysator (34) als Vier-Wege-Katalysator (52) ausgeführt ist.

8. Abgasnachbehandlungssystem nach Anspruch 7, **dadurch gekennzeichnet, dass** der Partikelfilter (52) ein elektrisch leitendes Filtersubstrat (54) aufweist, wobei das Filtersubstrat (54) durch das Anlegen einer elektrischen Spannung direkt beheizbar ist.

9. Verfahren zur Abgasnachbehandlung eines Verbrennungsmotors (10) mit einem Abgasnachbehandlungssystem nach einem der Ansprüche 1 bis 8, umfassend folgende Schritte:
- Starten des Verbrennungsmotors (10), wobei das
- Regeln des Verbrennungsluftverhältnisses des Verbrennungsmotors (10) in einer Kaltstartphase des Verbrennungsmotors durch die erste Lambdasonde (38) erfolgt,
- Beheizen des elektrisch beheizbaren Katalysators (34) ab dem Kaltstart des Verbrennungsmotors (10),
- Erweiterung der Lambdaregelung auf die Lambdasonde (40, 42) stromabwärts des in Strömungsrichtung jeweils letzten Katalysators (28, 30, 56), welcher seine Light-Off-Temperatur erreicht hat.

10. Verfahren zur Abgasnachbehandlung nach Anspruch 9, **dadurch gekennzeichnet, dass** die Lambdaregelung nach dem Prinzip der Eigenfrequenzregelung erfolgt.

11. Verfahren zur Abgasnachbehandlung nach Anspruch 9 oder 10, **dadurch gekennzeichnet, dass** das elektrische Beheizen des elektrisch beheizbaren Katalysators (34) nach dem Kaltstart solange aktiviert bleibt, dass ein Auskühlen des elektrisch beheizbaren Katalysators (34) unter seine Light-Off-Temperatur vermieden wird.

12. Verfahren zur Abgasnachbehandlung nach einem der Ansprüche 9 bis 11, **dadurch gekennzeichnet, dass** die Lambdaregelung durch die erste Lambdasonde (38) und die zweite Lambdasonde (40) erfolgt, wenn die Temperatur eines weiteren Katalysators (56) stromabwärts des elektrisch beheizbaren Katalysators (34) im Betrieb des Verbrennungsmotors (10) unter seine Light-Off-Temperatur absinkt.

## Claims

1. Exhaust-gas aftertreatment system for the exhaust-gas aftertreatment of an internal combustion engine (10), wherein an outlet (18) of the internal combustion engine (10) is capable of being connected to an exhaust-gas system (20), wherein, in the exhaust-gas system (20), a first three-way catalytic converter (28) and, downstream of the first three-way catalytic converter (28), an electrically heatable three-way catalytic converter (34) are arranged in the direction of flow of an exhaust gas through the exhaust-gas system (20), wherein three lambda probes (38, 40, 42) are arranged in the exhaust-gas system (20), wherein, in the exhaust-gas flow direction of an exhaust gas of the internal combustion engine (10) through the exhaust-gas system (20), a first lambda probe (38) is arranged upstream of the first three-way catalytic converter (28) and a second lambda probe (40) is arranged downstream of the first three-way catalytic converter (28) and upstream of the electrically heatable catalytic converter (34), and wherein, in the exhaust-gas system (20), a temperature sensor (48) for measuring an exhaust-gas temperature is arranged, **characterized in that**, in the exhaust-gas system (20), a third lambda probe (42) is arranged downstream of the second lambda probe (40), wherein the lambda probes (38, 40, 42) and the temperature sensor (48) are connected via signal lines to an engine control unit (50), wherein the engine control unit (50) is designed to reduce or extend the control path of the lambda control in dependence on the exhaust-gas temperature, wherein the control path of the lambda control is extended to the third lambda probe (42) as soon as the temperature reaches a light-off temperature of a catalytic converter (30, 56) arranged upstream of the third lambda probe (42) that is necessary for the conversion, and the controlled system is reduced again to the second lambda probe (40) when the temperature falls below the light-off temperature of the catalytic converter (30, 56) arranged upstream of the third lambda probe (42) that is necessary for the conversion.

2. Exhaust-gas aftertreatment system according to Claim 1, **characterized in that** the first three-way catalytic converter (28) is designed as a lambda-probe catalytic converter (32) with an integrated second lambda probe (40).

3. Exhaust-gas aftertreatment system according to Claim 2, **characterized in that** the third lambda probe (42) is arranged upstream of the electrically heatable catalytic converter (34) in the direction of flow of an exhaust gas of the internal combustion engine (10).

4. Exhaust-gas aftertreatment system according to Claim 1, **characterized in that**, in the exhaust-gas system (20), a third catalytic converter (56) is arranged downstream of the electrically heatable catalytic converter (34).

5. Exhaust-gas aftertreatment system according to Claim 4, **characterized in that** the first catalytic converter, the electrically heatable catalytic converter (34) and the third catalytic converter (56) each have a three-way-catalytically active coating and at least one of the catalytic converters (28, 34, 56) additionally has a substrate for retaining soot particles.

6. Exhaust-gas aftertreatment system according to one of Claims 1 to 5, **characterized in that** the first lambda probe (38) is designed as a wideband sensor (44) and the second and third lambda probes (40, 42) are designed as binary sensors.

7. Exhaust-gas aftertreatment system according to one of Claims 1 to 6, **characterized in that** the electrically heatable catalytic converter (34) is designed as a four-way catalytic converter (52).

8. Exhaust-gas aftertreatment system according to Claim 7, **characterized in that** the particle filter (52) has an electrically conducting filter substrate (54), wherein the filter substrate (54) is directly heatable by applying an electric voltage.

9. Method for exhaust-gas aftertreatment of an internal combustion engine (10) with an exhaust-gas aftertreatment system according to one of Claims 1 to 8, comprising the following steps:
- starting the internal combustion engine (10), wherein the
- control of the combustion air ratio of the internal combustion engine (10) in a cold-starting phase of the engine is performed by the first lambda probe (38),
- heating the electrically heatable catalytic converter (34) from the cold start of the internal combustion engine (10),
- extending the lambda control to the lambda probe (40, 42) downstream of the last catalytic converter (28, 30, 56) respectively in the direction of flow that has reached its light-off temperature.

10. Method for exhaust-gas aftertreatment according to Claim 9, **characterized in that** the lambda control is performed in accordance with the principle of natural frequency control.

11. Method for exhaust-gas aftertreatment according to Claim 9 or 10, **characterized in that** the electrical heating of the electrically heatable catalytic converter (34) remains activated after the cold start such that cooling of the electrically heatable catalytic converter (34) below its light-off temperature is avoided.

12. Method for exhaust-gas aftertreatment according to one of Claims 9 to 11, **characterized in that** the lambda control is performed by the first lambda probe (38) and the second lambda probe (40) if the temperature of a further catalytic converter (56) downstream of the electrically heatable catalytic converter (34) falls below its light-off temperature during the operation of the internal combustion engine (10).

## Revendications

1. Système de post-traitement de gaz d'échappement d'un moteur à combustion interne (10), une sortie (18) du moteur à combustion interne (10) pouvant être reliée à un système de gaz d'échappement (20), un premier convertisseur catalytique à trois voies (28) et, en aval du premier convertisseur catalytique à trois voies (28), un catalyseur à trois voies chauffable électriquement (34) étant disposé dans le système de gaz d'échappement (20) dans le sens d'écoulement d'un gaz d'échappement à travers le système de gaz d'échappement (20), trois sondes lambda (38, 40, 42) étant disposées dans le système de gaz d'échappement (20), une première sonde lambda (38) étant disposée en amont du premier convertisseur catalytique à trois voies (28) dans le sens d'écoulement des gaz d'échappement du moteur à combustion interne (10) à travers le système de gaz d'échappement (20) et une deuxième sonde lambda (40) étant disposée en aval du premier convertisseur catalytique à trois voies (28) et en amont du convertisseur catalytique chauffable électriquement (34), et un capteur de température (48) destiné à mesurer une température des gaz d'échappement étant disposé dans le système de gaz d'échappement (20), **caractérisé en ce qu'**une troisième sonde lambda (42) est disposée dans le système de gaz d'échappement (20) en aval de la deuxième sonde lambda (40), les sondes lambda (38, 40, 42) et le capteur de température (48) étant reliés à une unité de commande de moteur (50) par le biais de des lignes de signal, l'unité de commande de moteur (50) étant conçue pour raccourcir ou prolonger le trajet de régulation de la régulation lambda en fonction de la température des gaz d'échappement, le trajet de régulation de la régulation lambda étant prolongé à la troisième sonde lambda (42) dès qu'une température d'amorçage, nécessaire à la conversion, d'un convertisseur catalytique (30, 56) disposé en amont de la troisième sonde lambda (42) est atteinte, et le trajet de régulation s'étendant jusqu'à la deuxième sonde lambda (40) et étant raccourci si la température d'amorçage, nécessaire à la conversion, du convertisseur catalytique (30, 56) disposé en amont de la troisième sonde lambda (42) n'est pas atteinte.

2. Système de post-traitement de gaz d'échappement selon la revendication 1, **caractérisé en ce que** le premier convertisseur catalytique à trois voies (28) est conçu comme un convertisseur catalytique à sonde lambda (32) pourvu d'une deuxième sonde lambda intégrée (40).

3. Système de post-traitement de gaz d'échappement selon la revendication 2, **caractérisé en ce que** la troisième sonde lambda (42) est disposée en amont du convertisseur catalytique chauffable électriquement (34) dans le sens d'écoulement de gaz d'échappement du moteur à combustion interne (10).

4. Système de post-traitement de gaz d'échappement selon la revendication 1, **caractérisé en ce qu'**un troisième convertisseur catalytique (56) est disposé dans le système de gaz d'échappement (20) en aval du convertisseur catalytique chauffable électriquement (34).

5. Système de post-traitement de gaz d'échappement selon la revendication 4, **caractérisé en ce que** le premier convertisseur catalytique, le convertisseur catalytique chauffable électriquement (34) et le troisième convertisseur catalytique (56) comportent chacun un revêtement actif du point de vue de la catalyse à trois voies et au moins un des convertisseurs catalytiques (28, 34, 56) comporte en outre un substrat destiné à retenir les particules de suie.

6. Système de post-traitement de gaz d'échappement selon l'une des revendications 1 à 5, **caractérisé en ce que** la première sonde lambda (38) est conçue comme une sonde à large bande (44) et les deuxième et troisième sondes lambda (40, 42) sont conçues comme des sondes à seuil.

7. Système de post-traitement de gaz d'échappement selon l'une des revendications 1 à 6, **caractérisé en ce que** le convertisseur catalytique chauffable électriquement (34) est conçu comme un convertisseur catalytique à quatre voies (52).

8. Système de post-traitement de gaz d'échappement selon la revendication 7, **caractérisé en ce que** le filtre à particules (52) comporte un substrat filtrant électriquement conducteur (54), le substrat filtrant (54) pouvant être chauffé directement par application d'une tension électrique.

9. Procédé de post-traitement de gaz d'échappement d'un moteur à combustion interne (10) à l'aide d'un système de post-traitement de gaz d'échappement selon l'une des revendications 1 à 8, ledit procédé comprenant les étapes suivantes :
- démarrer le moteur à combustion interne (10),
- la régulation du rapport d'air de combustion du moteur à combustion interne (10) étant effectuée par la première sonde lambda (38) dans une phase de démarrage à froid du moteur à combustion interne,
- chauffer le convertisseur catalytique chauffable électriquement (34) dès le démarrage à froid du moteur à combustion interne (10),
- prolonger la régulation lambda à la sonde lambda (40, 42) en aval du dernier convertisseur catalytique (28, 30, 56), qui a atteint sa température d'amorçage, dans le sens d'écoulement.

10. Procédé de post-traitement de gaz d'échappement selon la revendication 9, **caractérisé en ce que** la régulation lambda est effectuée selon le principe de la régulation de fréquence propre.

11. Procédé de post-traitement de gaz d'échappement selon la revendication 9 ou 10, **caractérisé en ce que** le chauffage électrique du convertisseur catalytique chauffable électriquement (34) reste activé après le démarrage à froid tant que le convertisseur catalytique chauffable électriquement (34) est empêché de refroidir au-dessous de sa température d'amorçage.

12. Procédé de post-traitement de gaz d'échappement selon l'une des revendications 9 à 11, **caractérisé en ce que** la régulation lambda est effectuée par la première sonde lambda (38) et la deuxième sonde lambda (40) lorsque la température d'un autre convertisseur catalytique (56) en aval du convertisseur catalytique chauffable électriquement (34) descend au-dessous de la température d'amorçage dudit convertisseur pendant le fonctionnement du moteur à combustion interne (10).
